# FASCICULE DE BREVET EUROPEEN

(11) **EP 3 814 182 B1**
(45) Date de publication et mention de la délivrance du brevet: **04.10.2023**
(21) Numéro de dépôt: 19744770.9
(22) Date de dépôt: 25.06.2019
(51) Int. Cl.: B60T 7/20, B60T 15/02

(54) **PROCEDE ET SYSTEME DE FREINAGE HYDRAULIQUE AMELIORE POUR VEHICULE AVEC ATTELAGE**
VERBESSERTES VERFAHREN UND SYSTEM ZUR HYDRAULISCHEN BREMSUNG FÜR EIN FAHRZEUG MIT KUPPLUNG
IMPROVED METHOD AND SYSTEM OF HYDRAULIC BRAKING FOR VEHICLE WITH COUPLING

(30) Priorité: 28.06.2018 FR 1855858
(43) Date de publication de la demande: 05.05.2021
(73) Titulaire: Poclain Hydraulics Industrie, 60410 Verberie (FR)
(72) Inventeur: PRIGENT, André, 60410 Verberie (FR)
(74) Mandataire: Cabinet Beau de Loménie
(86) Numéro de dépôt international: PCT/FR2019/051556
(87) Numéro de publication internationale: WO 2020/002823

(56) Documents cités:
- EP-A1- 2 918 469
- EP-A1- 3 103 691
- EP-A1- 3 275 745
- WO-A1-2017/050632

## Description

### DOMAINE DE L'INVENTION

La présente invention concerne le domaine des circuits de freinage hydraulique, et trouve notamment une application pour les véhicules couplés à des remorques.

### ETAT DE LA TECHNIQUE ANTERIEURE

Les systèmes de freinage hydrauliques pour véhicules pouvant être munis d'une remorque, par exemple des tracteurs, doivent permettre d'assurer le pilotage du frein à la fois du véhicule et de la remorque. Le pilotage du frein de la remorque est dans l'usage distinct du pilotage du frein du véhicule.

La règlementation UE 2015/68 impose notamment qu'en cas de rupture de liaison entre le véhicule et son attelage, ce dernier soit automatiquement freiné.

Deux types de systèmes sont alors communément employés ; des systèmes de frein muni d'actionneurs du type SAHR pour « Spring Apply Hydraulic Release » (ressort appliqué, hydrauliquement libéré), ou des systèmes de frein muni d'actionneur simple pouvant être rempli par un accumulateur. Pour ce second type de systèmes de frein, une problématique récurrente concerne l'alimentation de cet accumulateur. Les systèmes connus prélèvent en effet de la pression sur une ligne hydraulique lorsque l'utilisateur actionne une commande dédiée afin de charger l'accumulateur.

Or, l'accumulateur est sollicité pour la réalisation du freinage de l'attelage dès lors qu'une rupture d'attelage est détectée. Les systèmes connus détectent une rupture d'attelage via une détection de pression, notamment une chute de pression, au sein d'une ligne hydraulique entre le véhicule et l'attelage, plus précisément entre une valve de freinage embarquée sur le véhicule et les moyens de freinage de la remorque. Cependant, plusieurs manoeuvres peuvent entraîner une chute de pression au sein de cette ligne hydraulique, sans pour autant qu'une rupture d'attelage se soit produit. En particulier, l'actionnement du frein à main du véhicule va entraîner une chute de pression au sein de la ligne hydraulique, assimilée par le système électronique du véhicule à une rupture d'attelage, et entrainant de fait une décharge de l'accumulateur vers le système de freinage de la remorque réalisant ainsi un freinage de secours de cette remorque.

Ainsi, l'utilisateur doit actionner volontairement une commande afin de déclencher une charge de l'accumulateur, en particulier par l'intermédiaire d'une pédale, typiquement la pédale de frein, ou d'une commande telle qu'une manette ou « joystick » selon l'appellation anglosaxonne communément employée. Cette action doit s'effectuer de manière fréquente notamment lors du démarrage du véhicule, après chaque utilisation du frein à main, et éventuellement à intervalle régulier si le système présente des fuites. Le document WO 2017/050632 présente un exemple de pilotage de circuit de freinage hydraulique.

On comprend ainsi que de tels systèmes sont non seulement contraignants pour l'utilisateur, mais peuvent également s'avérer dangereux si ce dernier ne réalise pas les opérations de charge de l'accumulateur, qui ne peut alors pas assurer la fonction de freinage de l'attelage en cas de rupture d'attelage.

### PRESENTATION DE L'INVENTION

Le présent exposé vise ainsi à proposer une réponse à cette problématique.
A cet effet, le présent exposé propose un système de freinage hydraulique d'un attelage de véhicule, dans lequel
- le véhicule comprend un circuit hydraulique d'alimentation et un circuit hydraulique de commande,
- l'attelage comprend un circuit hydraulique de freinage, relié via des connecteurs au circuit hydraulique d'alimentation et au circuit hydraulique de commande du véhicule, et un accumulateur hydraulique adapté pour délivrer une pression de freinage à des moyens de freinage de l'attelage, le système étant caractérisé en ce qu'il comprend un dispositif de pilotage configuré de manière à ce que, lorsque
- le véhicule est à l'arrêt, et
- la pression au sein de l'accumulateur hydraulique est inférieure ou égale à une valeur seuil de pression,
le dispositif de pilotage réalise une montée en pression de l'accumulateur hydraulique via le circuit hydraulique de commande.

Selon un exemple, le véhicule comprend un frein de parking, et dans lequel le dispositif de pilotage est configuré de manière à déterminer si le véhicule est à l'arrêt ou non en fonction de l'application ou non dudit frein de parking.

Selon l'invention, le dispositif de pilotage est configuré de manière à ne pas réaliser une montée en pression de l'accumulateur hydraulique si un signal de test est activé.

Selon un exemple, l'accumulateur hydraulique est relié au circuit hydraulique de commande via une soupape tarée, et dans lequel le dispositif de pilotage est configuré de manière à délivrer une pression via le circuit hydraulique de commande strictement supérieure à une pression de tarage de la soupape tarée.

Selon un exemple, le système comprend en outre un capteur de vitesse adapté pour mesurer la vitesse de déplacement du véhicule, et délivrer l'information au dispositif de pilotage.

Selon un exemple, le circuit hydraulique d'alimentation est configuré de manière à délivrer une pression nulle lorsque le frein de parking du véhicule est appliqué.

Le présent exposé concerne également un procédé de pilotage d'un circuit de freinage pour un véhicule muni d'un attelage,
le véhicule comprenant un circuit hydraulique d'alimentation et un circuit hydraulique de commande muni d'un dispositif de pilotage,
l'attelage comprenant un circuit hydraulique de freinage relié au circuit hydraulique d'alimentation et au circuit hydraulique de commande et comprenant un accumulateur hydraulique
dans lequel, lorsque
   - le véhicule est à l'arrêt, et
   - la pression au sein de l'accumulateur hydraulique est inférieure ou égale à une valeur seuil de pression,
le dispositif de pilotage réalise une montée en pression de l'accumulateur hydraulique via le circuit hydraulique de commande.

Selon un exemple, la détermination du fait que le véhicule soit à l'arrêt ou non est réalisée en fonction de l'application ou non d'un frein de parking du véhicule.

Selon l'invention, le dispositif de pilotage ne réalise une montée en pression de l'accumulateur hydraulique via le circuit hydraulique de commande qu'en l'absence d'un signal de test.

Selon un exemple, le dispositif de pilotage pilote le circuit hydraulique de commande de manière à délivrer une pression strictement supérieure à une pression de tarage d'une soupape tarée reliant l'accumulateur hydraulique au circuit hydraulique de commande.

Selon un exemple, un capteur de vitesse délivre une information relative à la vitesse de déplacement du véhicule au dispositif de pilotage.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente un exemple de circuit selon un aspect de l'invention,
- la figure 2 illustre schématiquement un procédé selon un aspect de l'invention, et
- la figure 3 représente un autre exemple de circuit selon un aspect de l'invention.

Sur l'ensemble des figures, les éléments en commun sont repérés par des références numériques identiques.

### DESCRIPTION DETAILLEE D'EXEMPLES DE REALISATION

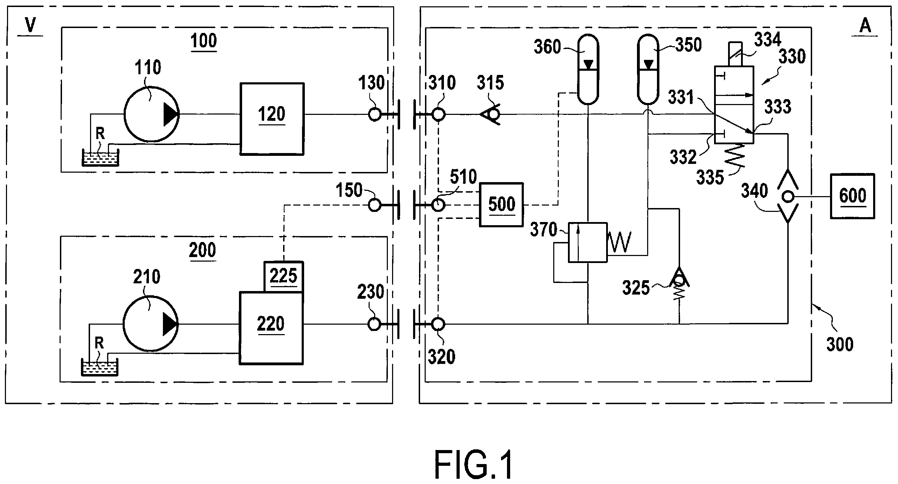

La figure 1 présente un système selon un aspect de l'invention.

On représente sur cette figure les composants de circuits hydrauliques d'un véhicule V muni d'un attelage A.

Le véhicule V comprend un circuit hydraulique d'alimentation 100 et un circuit hydraulique de commande 200. L'attelage A comprend un circuit hydraulique de freinage 300.

Le circuit hydraulique d'alimentation 100 comprend une source de pression d'alimentation 110, typiquement une pompe hydraulique pouvant être à cylindrée fixe et prélevant un fluide dans un réservoir R, ainsi qu'une valve d'alimentation 120 reliant la source de pression d'alimentation 110 à un connecteur hydraulique d'alimentation 130. La valve d'alimentation 120 permet de piloter le débit de fluide délivré par la source de pression d'alimentation 110 au connecteur hydraulique d'alimentation 130 ou de décharger le fluide dans le réservoir R, et est configurée de manière à ce qu'en cas d'application d'un frein de parking du véhicule V, la pression délivrée au connecteur hydraulique d'alimentation 130 soit nulle.

Le circuit hydraulique de commande 200 comprend une source de pression de commande 210, typiquement une pompe hydraulique à cylindrée fixe et prélevant un fluide dans un réservoir R, ainsi qu'une valve de commande 220 reliant la source de pression de commande 210 à un connecteur hydraulique de commande 230. La valve de commande 220 permet de piloter le débit de fluide délivré par la source de pression de commande 210 au connecteur hydraulique de commande 230 ou de décharger le fluide dans le réservoir R. La valve de commande 220 est associée à un calculateur 225 tel qu'une unité de commande électronique (communément désignée sous l'acronyme ECU) pilotant la valve de commande 220 et ainsi le débit délivré par la source de pression de commande 210 au connecteur hydraulique de commande 230.

Le circuit hydraulique de freinage 300 comprend un connecteur primaire 310 et un connecteur secondaire 320, adaptés pour être connectés respectivement au connecteur hydraulique d'alimentation 130 et au connecteur hydraulique de commande 230 du véhicule V. Selon la terminologie du règlement Européen 2015/68, la ligne hydraulique formée en connectant le connecteur hydraulique d'alimentation 130 et le connecteur primaire 310 est désignée par ligne supplémentaire, et la ligne hydraulique formée en connectant le connecteur hydraulique de commande 230 et le connecteur secondaire 320 est désignée par ligne de contrôle.

L'attelage A comprend un dispositif de freinage 600 comprenant des moyens de freinage hydrauliques alimenté par le circuit hydraulique de freinage 300. Lesdits moyens de freinage sont typiquement associés aux roues ou à au moins un moteur hydraulique d'assistance associé à un essieu ou à une roue. Le circuit hydraulique de freinage 300 est relié au dispositif de freinage 600 via un sélecteur de haute pression 340.

Le sélecteur de haute pression 340 est relié d'une part au connecteur secondaire 320, et d'autre part au connecteur primaire 310 par l'intermédiaire d'une valve de freinage 330.

La valve de freinage 330 présente un premier orifice 331, un deuxième orifice 332 et un troisième orifice 333.

Le premier orifice 331 est relié au connecteur primaire 310 par l'intermédiaire d'un clapet anti retour 315 n'autorisant un passage de fluide que dans le sens du connecteur primaire 310 vers le premier orifice 331

Le deuxième orifice 332 est relié à un accumulateur basse pression 350 et au connecteur secondaire 320 via un clapet anti retour taré 325

Le troisième orifice 333 est relié au sélecteur de haute pression 340.

La valve de freinage 330 est pilotée par une commande 334, typiquement électrique, à laquelle s'oppose un élément de rappel 335. La valve de freinage est ainsi pilotée pour basculer entre deux positions :
- une première position dans laquelle le deuxième orifice 332 est obturé, et le premier orifice 331 est relié au troisième orifice 333, et
- une second position dans laquelle le premier orifice 331 est obturé, et le deuxième orifice 332 est relié au troisième orifice 333.

La commande 334 et l'élément de rappel 335 sont typiquement configurés de sorte que, par défaut, c'est-à-dire en l'absence de pilotage par la commande 334, la valve de freinage 330 est dans sa première position.

Le connecteur secondaire 320 est également relié au premier orifice 331 de la valve de freinage 330 via une soupape de remplissage 370, configurée pour être passante dans le sens allant du connecteur secondaire 320 vers le premier orifice 331 de la valve de freinage 330 lorsque la pression au niveau du connecteur secondaire 320 dépasse une valeur seuil de pression. Cette valeur seuil de pression est typiquement élevée, par exemple de l'ordre de 100 bar.

Le circuit hydraulique de freinage 300 comprend également un accumulateur de freinage 360, relié au premier orifice 331 de la valve de freinage 330.

Le circuit hydraulique de freinage 300 comprend un contrôleur 500 relié à un connecteur électrique 510 de l'attelage A, associé à des capteurs de pression fournissant une information relative à la pression au niveau du connecteur primaire 310, du connecteur secondaire 320 et également au sein de l'accumulateur de freinage 360.

A titre de variante, seul le véhicule V comprend un calculateur 225. Les signaux issus de l'attelage A sont alors transmis directement à ce calculateur 225 par l'intermédiaire des connecteurs électriques 150 et 510.

Dans un autre mode de réalisation, le contrôleur 500 de l'attelage A est un manocontact réagissant à un changement de pression dans l'accumulateur de freinage 360 et venant actionner ou non la valve 330.

Pour une question de clarté du dessin plusieurs pompes ont été représentées. Mais de manière évidente il peut n'y avoir qu'une seule pompe commune pour le circuit hydraulique d'alimentation 100 et pour le circuit hydraulique de commande 200.

Lorsque l'attelage A est relié au véhicule V, le connecteur primaire 130 est relié au connecteur hydraulique d'alimentation 310, et le connecteur secondaire 320 est relié au connecteur hydraulique de commande 230. Une liaison électrique est également réalisée entre le véhicule V et l'attelage A via le connecteur électrique 510 de l'attelage A et un connecteur électrique 150 du véhicule V.

La source de pression d'alimentation 110 délivre une pression que l'on qualifie de basse pression, typiquement comprise entre 0 et 35 bar, qui vient ainsi pré charger l'accumulateur de freinage 360. La valve de freinage 330 est pilotée en fonction de la présence d'une pression sur la ligne supplémentaire afin de délivrer ou non une pression au dispositif de freinage 600 via le sélecteur de haute pression 340. Selon un exemple, un amplificateur de pression peut être disposé sur l'attelage A, sur la ligne supplémentaire, en parallèle du clapet anti retour 315, afin d'amplifier la pression dans la ligne supplémentaire en vue de l'actionnement du dispositif de freinage 600.

La source de pression de commande 210 délivre une pression variable au connecteur secondaire 320 via la valve de commande 220. La pression délivrée est pilotée par la valve de commande 220, et est typiquement fonction d'une consigne de freinage appliquée par l'utilisateur du véhicule V. La pression délivrée est communément qualifiée de « haute pression », typiquement comprise entre 0 et 150 bar.

Lorsqu'une consigne de freinage est appliquée, la valve de commande délivre une pression proportionnelle à cette consigne, qui vient alors actionner le dispositif de freinage 600. Si la pression est suffisante, l'accumulateur de freinage 360 est chargé via le limiteur de pression 370.

Lorsque l'utilisateur cesse d'appliquer la consigne de freinage, la pression délivrée via le connecteur secondaire 320 est réduite ou nulle. La pression dans le dispositif de freinage 600 est alors typiquement déchargée via le connecteur 320 et la valve 220 vers le réservoir du véhicule V.

En cas de rupture de l'attelage, le connecteur primaire 310 et le connecteur secondaire 320 sont désengagés respectivement du connecteur hydraulique d'alimentation 130 et du connecteur hydraulique de commande 230. La pression au niveau du connecteur primaire 310 et du connecteur secondaire 320 devient donc nulle. La valve de freinage 330 bascule dans sa première configuration du fait de la rupture de l'alimentation électrique de l'attelage ou du fait de la chute de pression dans la ligne hydraulique entre le connecteur primaire 310 et le clapet anti retour 315 dans le cas où la valve de freinage 300 est pilotée via un manocontact.

L'accumulateur de freinage 360 se décharge alors via la valve de freinage 330 vers le dispositif de freinage, réalisant une fonction de freinage d'urgence.

On comprend donc ici qu'il est important d'assurer la charge de l'accumulateur de freinage 360.

Or, en fonctionnement normale, ce dernier n'est rechargé que lorsque l'effort de freinage commandé par l'utilisateur est suffisant, comme décrit précédemment, et il se décharge lorsque l'on actionne le frein de parking.

Afin d'assurer une charge de l'accumulateur de freinage 360, le calculateur 225 est configuré de manière à piloter la valve de commande 220 afin d'automatiquement réaliser une charge de l'accumulateur de freinage 360 lorsque certaines conditions sont vérifiées.

Plus précisément, le calculateur 225 va piloter la valve de commande 220 de manière à délivrer une pression via le connecteur secondaire 320 afin de charger l'accumulateur de freinage 360 lorsque les conditions suivantes sont vérifiées :
- Le véhicule est à l'arrêt, typiquement avec un frein de parking appliqué,
- La charge de l'accumulateur de freinage 360 est insuffisante, et
- Le véhicule ou l'attelage n'est pas en phase de test du frein de parking.

Ces différents paramètres sont par exemple détectés de la manière suivante.

Le fait que le véhicule soit à l'arrêt (typiquement avec un frein de parking appliqué) peut par exemple être détecté en mesurant la pression au niveau du connecteur hydraulique de commande 130 (la pression étant nulle en cas d'application du frein de parking), et/ou en mesurant la vitesse de déplacement du véhicule V par exemple au moyen d'un capteur de vitesse ou un moyen de localisation du véhicule, la condition étant alors que la vitesse soit nulle, ou encore en recevant un signal de l'électronique de commande du véhicule V.

La charge de l'accumulateur de freinage 360 est mesurée au moyen d'un capteur de pression, qui fournit l'information au contrôleur 500, ce dernier fournissant l'infirmation au calculateur 225 via les connecteurs électriques 510 et 150. La condition est typiquement satisfaite lorsque la pression au sein de l'accumulateur de freinage 360 est inférieure ou égale à une valeur seuil de pression.

Le fait que le véhicule ou l'attelage ne soit pas en phase de test du frein de parking est une information fournie par l'électronique embarquée dans le véhicule ou dans l'attelage.

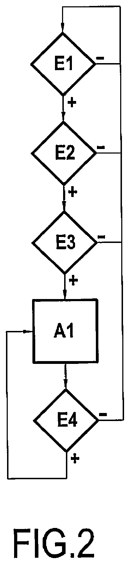

La figure 2 représente schématiquement un algorithme de commande du dispositif de pilotage.

Les différents blocs de l'algorithme sont les suivants :
E1 : étape de détermination de la charge de l'accumulateur de freinage 360. La charge de l'accumulateur de freinage 360 est mesurée, par exemple via un capteur de pression. Si la pression au sein de l'accumulateur de freinage 360 est inférieure ou égale à une valeur seuil de pression, alors l'algorithme va à l'étape E2. En variante la chute de pression dans l'accumulateur de freinage 360 peut être détecté par un manocontact. Dans la négative, il poursuite l'étape E1.
E2 : étape de détermination du fait que le véhicule soit ou non à l'arrêt, et/ou de l'application ou non du frein de parking du véhicule. Comme indiqué précédemment, cette détermination est par exemple réalisée en recevant un signal de l'électronique de commande du véhicule V, en mesurant ou en détectant la pression au niveau du connecteur hydraulique de commande 130, 310 et/ou en mesurant la vitesse de déplacement du véhicule V par exemple au moyen d'un capteur de vitesse ou un moyen de localisation du véhicule, la condition étant alors que la vitesse soit nulle. Si le calculateur détermine que le frein de parking est appliqué, alors l'algorithme va à l'étape E3. Dans la négative, il retourne à l'étape E1.
E3 : étape de vérification que le véhicule n'est pas dans un mode de test. Si le véhicule n'est effectivement pas en mode test, alors l'algorithme va à l'étape A1. Dans la négative (c'est-à-dire si le véhicule est en mode test), l'algorithme retourne à l'étape E1.

On note que l'ordre dans lequel sont réalisées les étapes E1, E2 et optionnellement E3 peut être modifié, dès lors que l'algorithme vérifie que les deux (ou optionnellement trois) conditions sont remplies avant d'engager A1.

A1 : action de montée en pression de l'accumulateur de freinage 360. Cette montée en pression est réalisée au moyen de la source de pression de commande 210, comme décrit précédemment.

E4 : étape de détermination de la charge de l'accumulateur de freinage 360. Lors de cette étape, on mesure à nouveau la charge de l'accumulateur de freinage 360, afin de déterminer si elle a atteint un niveau suffisant. Si la pression au sein de l'accumulateur de freinage 360 est supérieure ou égale à une seconde valeur seuil de pression (pouvant être identique ou distincte de la valeur seuil de pression de l'étape E1), alors l'algorithme stoppe l'étape A1, et retourne à l'étape E1. Dans la négative, l'algorithme poursuit l'exécution de l'étape A1.

En pratique, le système proposé permet ainsi d'assurer une charge automatique de l'accumulateur de freinage 360 à chaque démarrage du véhicule V et après chaque arrêt si nécessaire, sans nécessiter une action spécifique de l'utilisateur, ce qui est fortement avantageux à la fois en termes de facilité d'utilisation mais également de sécurité.

Le fait que la charge de l'accumulateur de freinage 360 soit réalisée lorsque le véhicule est à l'arrêt (typiquement lorsque le frein de parking est engagé) est avantageux en ce que la puissance consommée pour la charge de l'accumulateur de freinage 360 n'est pas pénalisante pour le déplacement du véhicule V, celui-ci étant en effet à l'arrêt. Cette opération est donc sans impact sur la conduite pour l'utilisateur.

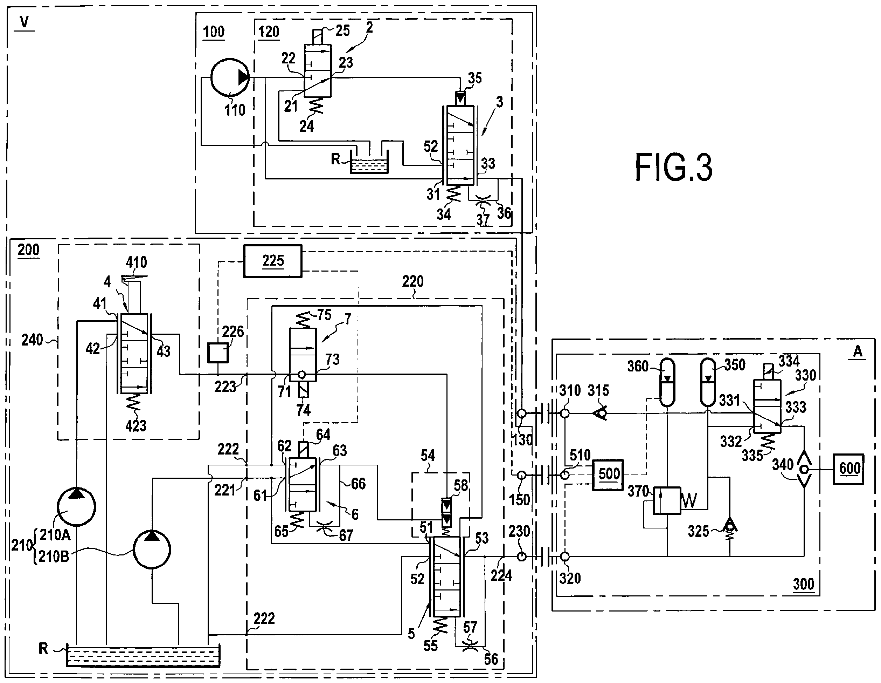

La figure 3 présente une variante du mode de réalisation représenté sur la figure 1 décrite précédemment.

Ce mode de réalisation détaille la structure du circuit hydraulique d'alimentation 100 et du circuit hydraulique de commande 200 du véhicule V. Le circuit hydraulique de freinage 300 de l'attelage A demeure inchangé par rapport au mode de réalisation déjà décrit en référence à la figure 1.

Le circuit hydraulique d'alimentation 100 comprend une pompe hydraulique 110, ainsi qu'une valve de contrôle 2 et une valve supplémentaire 3 formant la valve d'alimentation 120 déjà mentionnée en référence à la figure 1.

La valve de contrôle 2 présente un premier orifice 21 relié à la pompe hydraulique 110, un deuxième orifice 22 relié à un réservoir R, et un troisième orifice 23 relié à un actionneur hydraulique 35 de la valve supplémentaire 3 qui sera décrite par la suite. La valve de contrôle 2 est pilotée au moyen d'une commande électrique 25 à laquelle s'oppose un moyen de rappel 24 tel qu'un ressort.

La valve de contrôle 2 est par défaut (c'est-à-dire en l'absence d'application d'une commande via la commande électrique 25) dans une première configuration dans laquelle le premier orifice 21 est obturé, et le deuxième orifice 22 est relié au troisième orifice 23. L'application d'une commande par la commande électrique 25 va entraîner un basculement vers une seconde configuration dans laquelle le premier orifice 21 est relié au troisième orifice 23, et le deuxième orifice 22 est obturé, de manière à ce que la pression délivrée par la pompe hydraulique 110 traverse la valve de contrôle 2 et soit appliquée au niveau du troisième orifice 23. La valve de contrôle 2 joue ainsi un rôle de valve de type ON/OFF ou valve tout ou rien.

La valve supplémentaire 3 est une valve proportionnelle présentant un premier orifice 31 relié à la pompe hydraulique 110, un deuxième orifice 32 relié au réservoir R, et un troisième orifice 33 relié au connecteur hydraulique d'alimentation 130. Pour une question de clarté sur les figures plusieurs réservoirs et pompes ont été représentés. Mais de manière évidente il peut n'y a voir qu'un seul réservoir et qu'une seule pompe commune pour le circuit hydraulique d'alimentation 100 et pour le circuit hydraulique de commande 200. En variante si les fluides de freinages sont compatibles, il peut n'y avoir qu'une seule pompe et qu'un seul réservoir sur tout le véhicule V.

La valve supplémentaire 3 est pilotée au moyen d'un actionneur hydraulique 35 auquel s'opposent un moyen de rappel 34 tel qu'un ressort et une ligne de repiquage 36 munie d'une restriction 37 prélevant la pression en sortie du troisième orifice 33.

La valve supplémentaire délivre une pression à son troisième orifice 33 proportionnelle à une consigne appliquée à l'actionneur hydraulique 35, ou permet une purge de l'actionneur hydraulique 35 vers le réservoir R.

En fonctionnement, une consigne est envoyée à la commande électrique 25, qui pilote la valve de contrôle 2. Cette dernière délivre une pression pilotant la valve supplémentaire 3 via l'actionneur hydraulique 35, de manière à délivrer une pression au connecteur hydraulique d'alimentation 130. La commande électrique 25 est typiquement configurée de manière à être engagée lorsqu'un frein de parking du véhicule V est appliqué et ainsi mettre la ligne supplémentaire à une pression nulle.

On décrit ci-après le circuit hydraulique de commande 200 tel que présenté sur la figure 3.

Dans ce mode de réalisation, la source de pression de commande 210 composée de deux pompes hydrauliques 210A et 210B puisant chacune un fluide dans le réservoir R. En variante, les deux pompes hydrauliques 210A et 210B peuvent puiser un fluide dans des réservoirs distincts, ce qui permet ainsi un fonctionnement dans le cas où le véhicule V et son attelage présentent des circuits hydrauliques fonctionnant avec des fluides non compatibles.

La pompe hydraulique 210A est reliée à un circuit de commande 240, configurée de manière à délivrer une pression proportionnelle à une consigne de commande. Dans l'exemple représenté, le circuit de commande 200 comprend une valve de consigne 4 proportionnelle comprenant:
- un premier orifice 41 relié à la pompe hydraulique 210A,
- un deuxième orifice 42 relié au réservoir R, et
- un troisième orifice 43 formant un orifice de sortie de la valve de consigne 4, typiquement relié à un frein du véhicule V, et également à un troisième orifice 223 de la valve de commande 220 que l'on va décrire par la suite.

La valve de consigne 4 est pilotée au moyen d'une commande mécanique 410 à laquelle s'oppose un ressort de rappel 423, de manière à délivrer une pression au niveau de son troisième orifice 43 proportionnelle à une consigne appliquée par un utilisateur au moyen de la commande mécanique 410.

La valve de commande 220 déjà mentionnée en référence à la figure 1 est ici composée de trois valves que l'on décrit ci-après.

La valve de commande 220 présente un premier orifice 221 relié à la pompe hydraulique 210B, un deuxième orifice 222 relié au réservoir R, un troisième orifice 223 relié au troisième orifice 43 de la valve de freinage 4, et un quatrième orifice 224 relié au connecteur hydraulique de commande 230. La pression délivrée au troisième orifice 223 du circuit de pilotage 220 est donc pilotée via la valve de consigne 4, et est typiquement proportionnelle ou égale à la pression délivrée par la valve de consigne 4. Plus généralement, le troisième orifice 223 reçoit une pression proportionnelle à une consigne de freinage, pouvant être liée ou non à une consigne appliquée à un frein principal du véhicule V.

Le circuit de pilotage 220 se présente typiquement sous la forme d'un boîtier, ou sous la forme de différents éléments associés et reliés via des conduites hydrauliques. On comprend que certains des orifices mentionnés peuvent être dédoublés, notamment le deuxième orifice 222 relié au réservoir R peut être dédoublé en fonction de la structure des composants utilisés, ce qui est le cas sur les figures. Selon la structure retenue pour le circuit de pilotage 220, les orifices 221, 222, 223 et 224 peuvent être formés dans un boîtier du circuit de pilotage, ou être formés directement par les orifices des valves et électrovannes que l'on décrit ci-après.

Le circuit de pilotage 220 tel que représenté sur la figure 3 comprend une valve de commande 5, une électrovanne proportionnelle 6 et une électrovanne tout ou rien 7.

La valve de commande 5 est une valve proportionnelle pilotée par une commande hydraulique.

La valve de commande 5 présente un fonctionnement similaire à la valve de consigne 4, tel que décrit précédemment, seul le pilotage de cette valve de commande 5 étant distinct, ici une commande hydraulique au lieu de la commande mécanique 410 de la valve de consigne 4. La valve de commande 5 présente un premier orifice 51 relié à la pompe hydraulique 210B via le premier orifice 221 du circuit de pilotage 220, un deuxième orifice 52 relié au réservoir R via le deuxième orifice 222 du circuit de pilotage 220, et un troisième orifice 53 relié au connecteur hydraulique de commande 230 via le quatrième orifice 224 du circuit de pilotage.

La valve de commande 5 est pilotée par une commande hydraulique 54 à laquelle s'oppose un moyen de rappel 55 tel qu'un ressort, et présente également une ligne de repiquage 56 réalisant une fonction de boucle de retour permettant d'atteindre un point d'équilibre lorsque la pression souhaitée est délivrée au niveau du troisième orifice 53 de la valve de commande 5 (et donc au quatrième orifice 224 du circuit de pilotage 220 et au connecteur hydraulique de commande 230). La ligne de repiquage 56 est typiquement munie d'un limiteur de débit 57 ou restriction, et applique une pression égale à la pression au niveau du troisième orifice 53 sur la valve de commande 5, en opposition à l'action de la commande hydraulique 54. La valve de commande 5 est typiquement configurée de manière à délivrer une pression de sortie (c'est-à-dire à son troisième orifice 53, et donc au quatrième orifice 224 du circuit de pilotage 220) amplifiée d'un rapport de sortie par rapport à la pression de pilotage appliquée par la commande hydraulique 54. A titre d'exemple, ce rapport de sortie est typiquement compris entre 4 et 9, ou encore égal à 5, de sorte que la pression au niveau du troisième orifice 53 soit égale à 5 fois la pression de pilotage appliquée à la commande hydraulique 54.

La valve de commande 5 est par défaut (c'est à dire en l'absence de l'application d'une pression via la commande hydraulique 54) dans une configuration dans laquelle le premier orifice 51 est obturé, et le deuxième orifice 52 est relié au troisième orifice 53. L'application d'une pression par la commande hydraulique 54 va basculer la valve de commande 5 dans une configuration dans laquelle le premier orifice 51 est relié au troisième orifice 53, et le deuxième orifice 52 est obturé, proportionnellement à la pression appliquée par la commande hydraulique 54, de sorte que la pression au niveau du troisième orifice 53 soit proportionnelle à la pression appliquée via la commande hydraulique 54. C'est cette configuration qui est représentée sur la figure 3.

Dans le mode de réalisation représenté, la commande hydraulique 54 comprend un actionneur hydraulique 58 présentant ainsi deux pistons liés respectivement à un troisième orifice 63 de l'électrovanne proportionnelle 6, et à un troisième orifice 73 de l'électrovanne tout ou rien 7 (qui seront décrites par la suite), et réalise un pilotage en pression de la valve de commande 5 par la pression la plus élevée entre la pression au troisième orifice 63 de l'électrovanne proportionnelle 6 et la pression au troisième orifice 73 de l'électrovanne tout ou rien 7.

L'électrovanne proportionnelle 6 présente un premier orifice 61 relié à la pompe hydraulique 210B via le premier orifice 221 du circuit de pilotage 220, un deuxième orifice 62 relié au réservoir R via le deuxième orifice 222 du circuit de pilotage 220, et un troisième orifice 63 relié à l'actionneur hydraulique 58 de la commande hydraulique 54.

L'électrovanne proportionnelle 6 est pilotée via une commande électrique 64 à laquelle s'opposent un moyen de rappel 65 et une pression prélevée au niveau du troisième orifice 63 par une ligne de repiquage 66 munie d'une restriction 67. L'électrovanne proportionnelle 6 est par défaut (c'est-à-dire en l'absence d'application d'une commande via la commande électrique 64) dans une première configuration dans laquelle le premier orifice 61 est obturé, et le deuxième orifice 62 est relié au troisième orifice 63. L'application d'une commande par la commande électrique 64 va entraîner un basculement proportionnel vers une seconde configuration dans laquelle le premier orifice 61 est relié au troisième orifice 63, et le deuxième orifice 62 est obturé, de manière à ce que la pression au niveau du troisième orifice 63 soit proportionnelle à la commande appliquée. La commande électrique 64 est elle-même pilotée par le calculateur 225, ce dernier étant également couplé à un capteur de pression 226 délivrant une information relative à la pression au niveau du troisième orifice 223 du circuit de pilotage 220.

L'électrovanne tout ou rien 7 présente un premier orifice 71 relié au troisième orifice 43 de la valve de consigne 4 et un deuxième orifice 72 relié à l'actionneur hydraulique 58 de la commande hydraulique 54. L'électrovanne tout ou rien 7 alterne ainsi entre une première configuration dans laquelle le premier orifice 71 est relié au deuxième orifice 72 de manière à permettre un passage de fluide dans les deux sens, et une seconde configuration dans laquelle le passage de fluide depuis le premier orifice 71 vers le deuxième orifice 72 est impossible (la circulation en sens inverse demeurant possible). La commande hydraulique 54 est ici également reliée au réservoir R de manière à permettre une purge de fluide.

L'électrovanne tout ou rien 7 est pilotée par une commande 74 électrique, à laquelle s'oppose un moyen de rappel 75 tel qu'un ressort. Le moyen de rappel 75 maintient par défaut (c'est-à-dire en l'absence de commande appliquée par la commande 74) dans la première configuration. L'actionnement de la commande 74 permet de faire basculer l'électrovanne tout ou rien 7 depuis la première configuration vers la seconde configuration. Ce basculement est du type tout ou rien, c'est-à-dire que l'application d'une commande via la commande 74 bascule directement l'électrovanne tout ou rien 7 dans la seconde configuration, contrairement à une électrovanne proportionnelle.

On comprend de ce qui précède que la commande hydraulique 54 réalise ainsi un pilotage en pression de la valve de commande 5 par la pression la plus élevée parmi la pression délivrée par l'électrovanne proportionnelle 6 et la pression délivrée par l'électrovanne tout ou rien 7.

Le circuit de pilotage 220 et le circuit de commande 240 tels que proposés permettent de délivrer une pression au connecteur hydraulique de commande 230 même en cas de défaillance électrique. En effet, dans une telle situation la commande hydraulique 54 réalise un pilotage en pression de la valve de commande 5 par la pression au troisième orifice 43 de la valve de consigne 4 via l'électrovanne tout ou rien 7 dans sa première configuration.

L'actionneur hydraulique 58 est ainsi relié au troisième orifice 43 de la valve de consigne 4, assurant ainsi une pression de commande pour la valve de commande 5 pilotée notamment par l'utilisateur via la commande mécanique 410.

Le mode de réalisation représenté sur la figure 3 permet de réaliser la fonction de charge de l'accumulateur de freinage 360 même en cas de défaillance électrique du véhicule V, le pilotage de la pression délivrée au connecteur hydraulique de commande 230 via la valve de commande 5 étant alors réalisé via l'électrovanne tout ou rien 7.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Système de freinage hydraulique d'un attelage (A) de véhicule (V), dans lequel
- le véhicule (V) comprend un circuit hydraulique d'alimentation (100) et un circuit hydraulique de commande (200),
- l'attelage (A) comprend un circuit hydraulique de freinage (300), relié via des connecteurs au circuit hydraulique d'alimentation (100) et au circuit hydraulique de commande (200) du véhicule (V), et un accumulateur (360) hydraulique adapté pour délivrer une pression de freinage à des moyens de freinage (600) de l'attelage (A),
le système comprenant un dispositif de pilotage (225) configuré de manière à ce que, lorsque
- le véhicule (V) est à l'arrêt, et
- la pression au sein de l'accumulateur (360) hydraulique est inférieure ou égale à une valeur seuil de pression,
le dispositif de pilotage (225) réalise une montée en pression de l'accumulateur (360) hydraulique via le circuit hydraulique de commande (200),
**caractérisé en ce que** le dispositif de pilotage (225) est configuré de manière à ne pas réaliser une montée en pression de l'accumulateur hydraulique (360) si un signal de test est activé.

2. Système de freinage selon la revendication 1, dans lequel le véhicule (V) comprend un frein de parking, et dans lequel le dispositif de pilotage (225) est configuré de manière à déterminer si le véhicule (V) est à l'arrêt ou non en fonction de l'application ou non dudit frein de parking.

3. Système de freinage selon l'une des revendications 1 ou 2, dans lequel l'accumulateur hydraulique (360) est relié au circuit hydraulique de commande (200) via une soupape tarée (370), et dans lequel le dispositif de pilotage (225) est configuré de manière à délivrer une pression via le circuit hydraulique de commande (200) strictement supérieure à une pression de tarage de la soupape tarée (370).

4. Système selon l'une des revendications 1 à 3, comprenant en outre un capteur de vitesse adapté pour mesurer la vitesse de déplacement du véhicule (V), et délivrer l'information au dispositif de pilotage (225).

5. Système selon l'une des revendications 1 à 4, dans lequel le circuit hydraulique d'alimentation (100) est configuré de manière à délivrer une pression nulle lorsque le frein de parking du véhicule (V) est appliqué.

6. Procédé de pilotage d'un circuit de freinage pour un véhicule (V) muni d'un attelage (A),
le véhicule (V) comprenant un circuit hydraulique d'alimentation (100) et un circuit hydraulique de commande (200) muni d'un dispositif de pilotage (225),
l'attelage (A) comprenant un circuit hydraulique de freinage (300) relié au circuit hydraulique d'alimentation (100) et au circuit hydraulique de commande (200) et comprenant un accumulateur (360) hydraulique dans lequel, lorsque
- le véhicule (V) est à l'arrêt, et
- la pression au sein de l'accumulateur hydraulique (360) est inférieure ou égale à une valeur seuil de pression,
le dispositif de pilotage (225) réalise une montée en pression de l'accumulateur (360) hydraulique via le circuit hydraulique de commande (200),
dans lequel le dispositif de pilotage (225) ne réalise une montée en pression de l'accumulateur (360) hydraulique via le circuit hydraulique de commande (200) qu'en l'absence d'un signal de test.

7. Procédé selon la revendication 6, dans la détermination du fait que le véhicule soit à l'arrêt ou non est réalisée en fonction de l'application ou non d'un frein de parking du véhicule (V).

8. Procédé selon l'une des revendications 6 ou 7, dans lequel le dispositif de pilotage (225) pilote le circuit hydraulique de commande (200) de manière à délivrer une pression strictement supérieure à une pression de tarage d'une soupape tarée (370) reliant l'accumulateur hydraulique (360) au circuit hydraulique de commande (200).

9. Procédé selon l'une des revendications 6 à 8, dans lequel un capteur de vitesse délivre une information relative à la vitesse de déplacement du véhicule au dispositif de pilotage (225).

## Patentansprüche

1. Hydraulisches Bremssystem einer Kupplung (A) eines Fahrzeugs (V), wobei
- das Fahrzeug (V) einen hydraulischen Versorgungskreis (100) und einen hydraulischen Regelkreis (200) umfasst,
- die Kupplung (A) einen hydraulischen Bremskreis (300), der über Verbindungsstücke mit dem hydraulischen Versorgungskreis (100) und mit dem hydraulischen Regelkreis (200) des Fahrzeugs (V) verbunden ist, und einen Hydraulikspeicher (360), der dazu ausgelegt ist, einen Bremsdruck auf Bremsmittel (600) der Kupplung (A) zu erzeugen, wobei das System eine Steuervorrichtung (225) umfasst, die derart ausgestaltet ist, dass, wenn
- das Fahrzeug (V) stillsteht und
- der Druck innerhalb des Hydraulikspeichers (360) kleiner oder gleich einem Druckschwellenwert ist,
die Steuervorrichtung (225) einen Druckanstieg in dem Hydraulikspeicher (360) über den hydraulischen Regelkreis (200) bewirkt,
**dadurch gekennzeichnet, dass** die Steuervorrichtung (225) derart ausgestaltet ist, dass sie keinen Druckanstieg in dem Hydraulikspeicher (360) bewirkt, wenn ein Prüfsignal aktiviert ist.

2. Bremssystem nach Anspruch 1, wobei das Fahrzeug (V) eine Feststellbremse umfasst und wobei die Steuervorrichtung (225) derart ausgestaltet ist, dass sie in Abhängigkeit der Betätigung oder Nichtbetätigung der Feststellbremse bestimmt, ob das Fahrzeug (V) stillsteht oder nicht.

3. Bremssystem nach einem der Ansprüche 1 oder 2, wobei der Hydraulikspeicher (360) mit dem hydraulischen Regelkreis (200) über ein geeichtes Ventil (370) verbunden ist und wobei die Steuervorrichtung (225) derart ausgestaltet ist, dass sie einen Druck über den hydraulischen Regelkreis (200) erzeugt, der deutlich über einem Eichdruck des geeichten Ventils (370) liegt.

4. System nach einem der Ansprüche 1 bis 3, ferner umfassend einen Geschwindigkeitssensor, der dazu ausgelegt ist, die Bewegungsgeschwindigkeit des Fahrzeugs (V) zu messen und die Information an die Steuervorrichtung (225) bereitzustellen.

5. System nach einem der Ansprüche 1 bis 5, wobei der hydraulische Versorgungskreis (100) derart ausgestaltet ist, dass er einen Nulldruck erzeugt, wenn die Feststellbremse des Fahrzeugs (V) betätigt wird.

6. Verfahren zum Steuern eines Bremskreises für ein mit einer Kupplung (A) ausgestattetes Fahrzeug (V),
wobei das Fahrzeug (V) einen hydraulischen Versorgungskreis (100) und einen hydraulischen Regelkreis (200) umfasst, die mit einer Steuervorrichtung (225) ausgestattet sind,
wobei die Kupplung (A) einen hydraulischen Bremskreis (300) umfasst, der mit dem hydraulischen Versorgungskreis (100) und mit dem hydraulischen Regelkreis (200) verbunden ist und einen Hydraulikspeicher (360) umfasst,
wobei, wenn
- das Fahrzeug (V) stillsteht und
- der Druck innerhalb des Hydraulikspeichers (360) kleiner oder gleich einem Druckschwellenwert ist,
die Steuervorrichtung (225) einen Druckanstieg in dem Hydraulikspeicher (360) über den hydraulischen Regelkreis (200) bewirkt,
wobei die Steuervorrichtung (225) nur dann einen Druckanstieg in dem Hydraulikspeicher (360) über den hydraulischen Regelkreis (200) bewirkt, wenn kein Prüfsignal vorliegt.

7. Verfahren nach Anspruch 6, wobei die Bestimmung der Tatsache, dass das Fahrzeug stillsteht oder nicht, in Abhängigkeit der Betätigung oder Nichtbetätigung einer Feststellbremse des Fahrzeugs (V) erfolgt.

8. Verfahren nach einem der Ansprüche 6 oder 7, wobei die Steuervorrichtung (225) den hydraulischen Regelkreis (200) derart steuert, dass ein Druck erzeugt wird, der deutlich über einem Eichdruck eines geeichten Ventils (370) liegt, das den Hydraulikspeicher (360) mit dem hydraulischen Regelkreis (200) verbindet.

9. Verfahren nach einem der Ansprüche 6 bis 8, wobei ein Geschwindigkeitssensor eine Information bezüglich der Bewegungsgeschwindigkeit des Fahrzeugs an die Steuervorrichtung (225) bereitstellt.

## Claims

1. A hydraulic braking system for a coupling (A) of a vehicle (V), wherein
- the vehicle (V) comprises a hydraulic supply circuit (100) and a hydraulic control circuit (200),
- the coupling (A) comprises a hydraulic braking circuit (300), linked via connectors to the hydraulic supply circuit (100) and to the hydraulic control circuit (200) of the vehicle (V), and a hydraulic accumulator (360) suitable for delivering a braking pressure to braking means (600) of the coupling (A),
the system comprising a driving device (225) configured in such a way that, when
- the vehicle (V) is stopped, and
- the pressure inside the hydraulic accumulator (360) is less than or equal to a threshold pressure value,
the driving device (225) increases the pressure of the hydraulic accumulator (360) via the hydraulic control circuit (200),
**characterized in that** the driving device (225) is configured in such a way as to not increase the pressure of the hydraulic accumulator (360) if a test signal is actuated.

2. The braking system as claimed in claim 1, wherein the vehicle (V) comprises a parking brake, and wherein the driving device (225) is configured in such a way as to determine whether or not the vehicle (V) is stopped according to whether or not said parking brake is applied.

3. The braking system as claimed in one of claims 1 or 2, wherein the hydraulic accumulator (360) is linked to the hydraulic control circuit (200) via a tared valve (370), and wherein the driving device (225) is configured in such a way as to deliver a pressure via the hydraulic control circuit (200) strictly greater than a taring pressure of the tared valve (370).

4. The braking system as claimed in one of claims 1 to 3, further comprising a speed sensor suitable for measuring the speed of travel of the vehicle (V), and delivering the item of information to the driving device (225).

5. The braking system as claimed in one of claims 1 to 4, wherein the hydraulic supply circuit (100) is configured in such a way as to deliver a zero pressure when the parking brake of the vehicle (V) is applied.

6. A method for driving a braking circuit for a vehicle (V) equipped with a coupling (A),
the vehicle (V) comprising a hydraulic supply circuit (100) and a hydraulic control circuit (200) equipped with a driving device (225),
the coupling (A) comprising a hydraulic braking circuit (300) linked to the hydraulic supply circuit (100) and to the hydraulic control circuit (200) and comprising a hydraulic accumulator (360)
wherein, when
- the vehicle (V) is stopped, and
- the pressure inside the hydraulic accumulator (360) is less than or equal to a threshold pressure value,
the driving device (225) increases the pressure of the hydraulic accumulator (360) via the hydraulic control circuit (200),
wherein the driving device (225) only increases the pressure of the hydraulic accumulator (360) via the hydraulic control circuit (200) in the absence of a test signal.

7. The method as claimed in claim 6, wherein the determination of whether or not the vehicle is stopped is performed according to whether or the parking brake of the vehicle (V) is applied.

8. The method as claimed in one of claims 6 or 7, wherein the driving device (225) drives the hydraulic control circuit (200) in such a way as to deliver a pressure strictly greater than a taring pressure of a tared valve (370) linking the hydraulic accumulator (360) to the hydraulic control circuit (200).

9. The method as claimed in one of claims 6 to 8, wherein a speed sensor delivers an item of information relating to the speed of travel of the vehicle to the driving device (225).
